# NEW EUROPEAN PATENT SPECIFICATION

(11) **EP 2 250 872 B2**
(45) Date of publication and mention of the opposition decision: **20.01.2016**
(45) Mention of the grant of the patent: 26.09.2012
(21) Application number: 10159576.7
(22) Date of filing: 12.04.2010
(51) Int. Cl.: A01D 41/14, F16B 11/00

(54) **Harvester Head with Adhesive Attached Back Sheet**
Erntemaschinenkopf mit einem mit Klebemittel befestigtem Rückblech
Tête de moissonneuse avec feuille fixée à l'arrière au moyen d'adhésifs

(30) Priority: 11.05.2009 US 463658
(43) Date of publication of application: 17.11.2010
(73) Proprietor: Deere & Company, Moline, IL 61265-8098 (US)
(72) Inventor: Tipnis, Akhil R, Bettendorf, IA 52722 (US); Rieck, Steven Timothy, Cambridge, IL 61238 (US)
(74) Representative: Holst, Sönke

(56) References cited:
- EP-A1- 1 776 855
- EP-A1- 1 820 385
- WO-A1-87/02745
- DE-B- 1 075 885
- DE-B- 1 118 134
- US-A- 4 300 335
- US-A- 5 671 595

## Description

The invention relates to agricultural equipment. More particularly, it relates to harvesting equipment. Even more particularly, it relates to harvester heads for gathering crop that are supported on feederhouses of combine vehicles and extend laterally with respect to the direction of travel through the agricultural field.

In recent years, harvester heads for combine vehicles have been designed with increasing widths. By increasing the width they are capable of harvesting a wider swath of cereal crops or more rows of maize. As the harvester heads get wider, their weight increases. The harvester head is supported on the feederhouse and therefore its rotational inertia about the feederhouse increases as the length of the harvester head increases.

In one common form, harvester heads of agricultural harvesters are constructed from one or more laterally extending structural beams and associated linking members that form a framework. Attached to these beams and linking members are thin sheets of metal that form the working surfaces which contain the cut crop material. These working surfaces, formed of elongate panels of sheet metal, are not used primarily to provide substantial strength and rigidity to the harvester head, but to support the crop material as it is moved by the auger from each row unit to the entrance of the feederhouse. Since they only support the weight of the cut crop material they do not need to be heavy. They can be made very thin and light and still function well.

EP 1 820 385 A1 describes a combine header with transverse beams to which metal sheets forming an auger trough and a rear wall are mounted by weld connections.

WO 87/02745 A1 describes a joint for mounting vehicle body sheet parts together. The joint comprises mechanically locked sheet parts and an adhesive layer.

It is difficult to secure thin panels to each other. In the prior art, the panels are typically welded or bolted to the framework of the harvester head and to each other.

As the thickness of the panels forming the working surfaces is reduced, the stress concentrations around the fastening points can become quite large. Further, it is difficult to weld thin materials. The thermal cycling caused by welding can cause the panels to warp as they are welded or thereafter, thereby providing a rippled, twisted, bent, dimpled, or other irregular or unsightly surface.

What is needed are methods of assembling the harvester head including aligning its component parts and securing them together. What is also needed are methods of adhesively securing the working surfaces to each other and to the framework of a harvester head. What is also needed is a harvester head that is manufactured according to one or more of these methods.

This object is achieved with the subject matter of claim 1. The dependent claims recites advantageous features of an embodiment of the invention.

A first transversely extending working surface of a harvester head is provided, the first transversely extending working surface having a transversely extending upper surface portion configured to be mechanically adhered to a framework of the harvester head and a second transversely extending lower surface portion configured to be mechanically adhered to a second transversely extending working surface of the harvester head.

An embodiment of the invention is shown in the drawings in which:
Figure 1 is a perspective view of an agricultural harvester in accordance with the present invention.
Figure 2 is a cross-sectional view of the harvester head of Figure 1 taken at section line A-A in Figure 1 with the points, covers, auger tube, and row units removed.
Figure 3 is a perspective view of the cross-section of Figure 2.
Figure 4 is a fragmentary perspective view illustrating a portion of the first elongate beam of the harvester head, the back sheet, and the auger trough.
Figures 5A-5C are a sequence of three side views illustrating the process of assembling the back sheet and the auger trough.

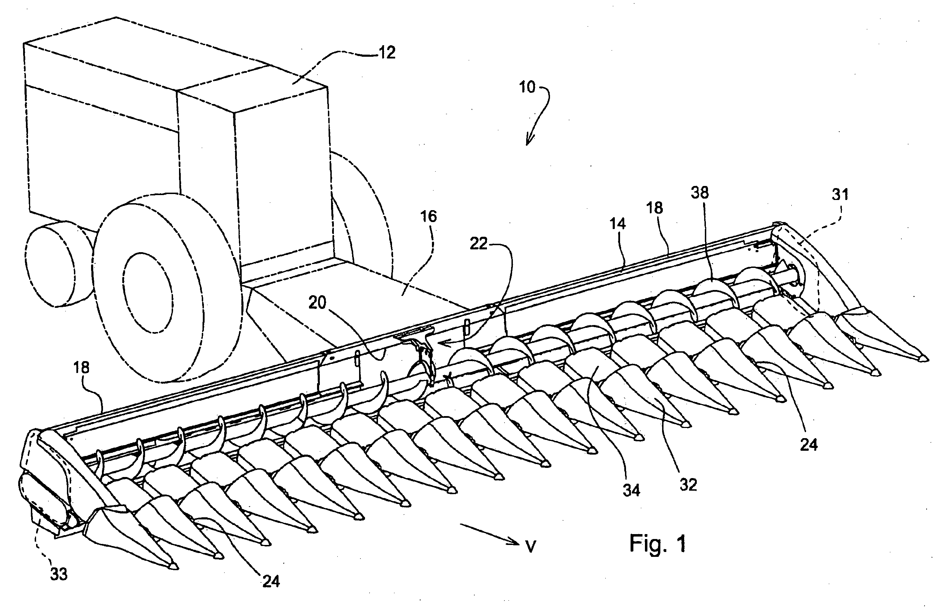

In Figure 1, an agricultural harvester 10 comprises a self-propelled vehicle 12 and a harvester head 14 supported on the self-propelled vehicle 12. The self-propelled vehicle 12 includes conventional means for threshing crop material, separating grain from the crop material, and cleaning the grain, which is not illustrated herein, but which is well known in the art.

The self-propelled vehicle 12 supports the harvester head 14 on a feederhouse 16 mounted on the front of the self-propelled vehicle 12. The members extend forward form the feederhouse 16 into a central aperture 22 of the feederhouse 16. A lower surface of first elongate beam 18 defines the top edge 20 of this central aperture 22. A portion of the feederhouse 16 extends into the central aperture 22. Harvester head 14 is supported on this portion of the feederhouse.

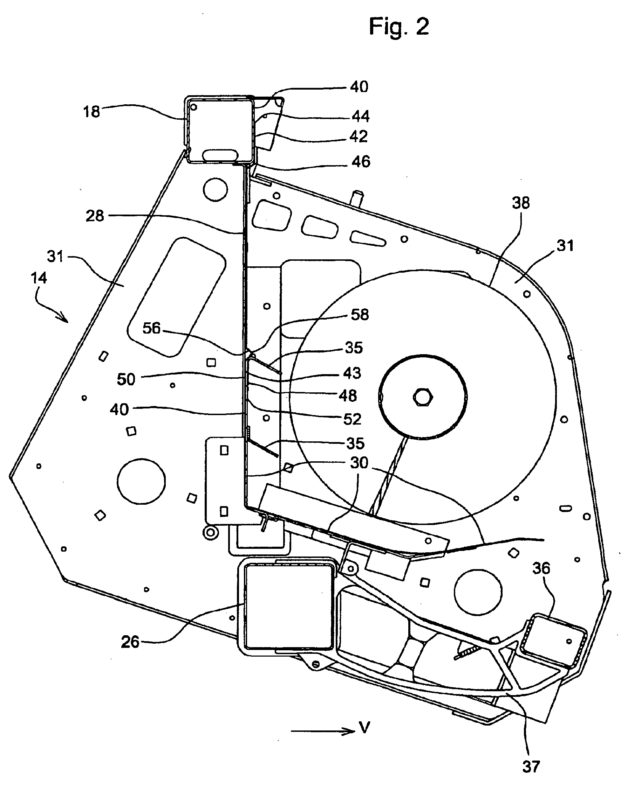

The harvester head 14 has a plurality of row units 24 (12 in the illustrated embodiment) that are disposed transversely across a leading edge of the harvester head 14 and are fixed to a toolbar 36 (better shown in Fig. 2). The row units 24 are shielded with points 32 and covers 34. The points 32 serve to separate adjacent rows of plants and direct the plants into the inlet of the row units 24. The covers 34 cover the rear portions of the row units 24 and prevent plant matter from jamming the row units 24. The harvester head 14 extends transversely (i.e. perpendicularly) to the direction of travel "V" of the agricultural harvester 10. End walls 31, 33 are disposed at opposing transverse ends of the harvester head. A transverse conveyor, here shown as auger 38, extends transversely across substantially the entire width of the harvester head. It conveys cut crop material from the row units 24 to the central aperture 22. When received in the central aperture 22, the cut crop material is conveyed by a conveyor disposed in feederhouse 16 into the self-propelled vehicle 12 where it is threshed, separated, and cleaned.

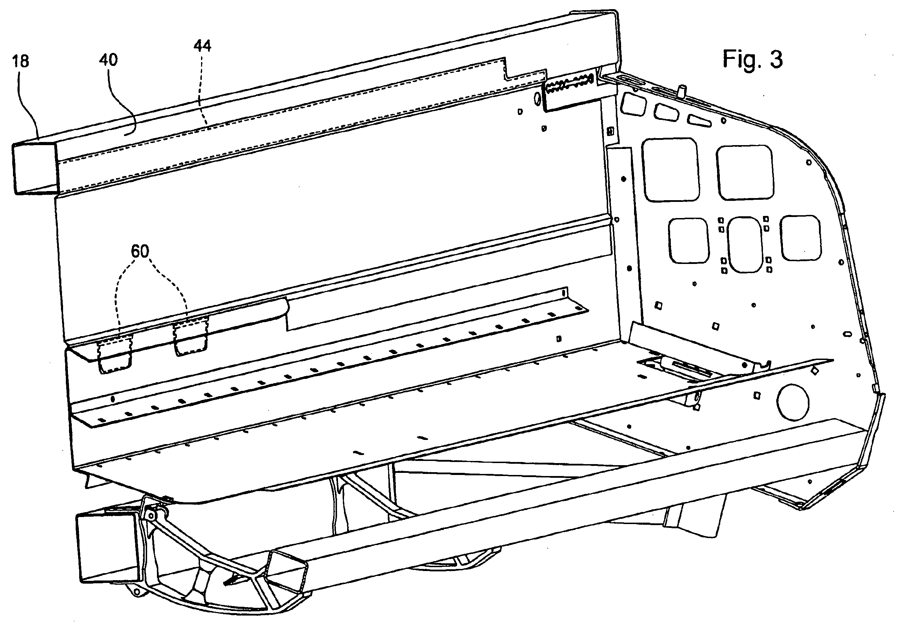

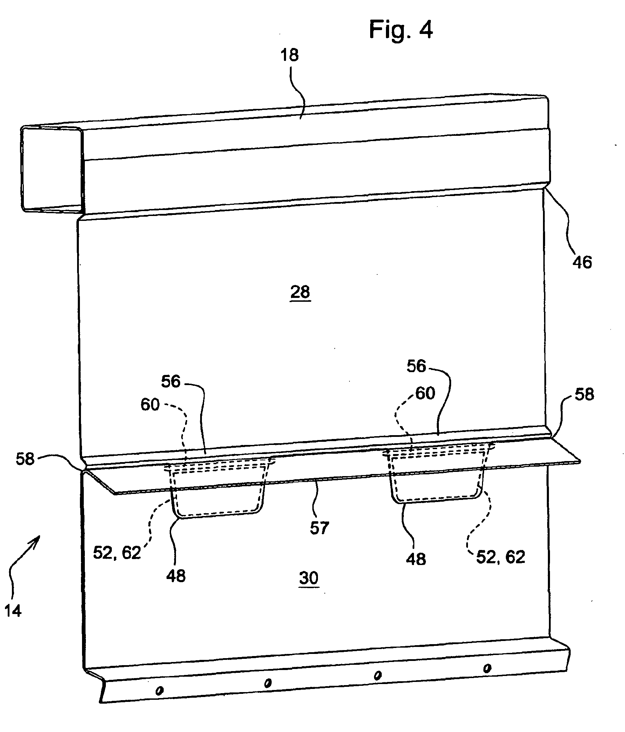

Referring now to Figures 3 and 4, the harvester head 14 comprises a framework which comprises the first elongate beam 18, a second elongate beam 26, a toolbar 36, toolbar supports 37, and two end walls 31, 33. This framework supports a back sheet 28 and a conveyor floor, here shown as an auger trough 30, as well as row units 24 (shown in Figure 1).

The end walls 31, 33 (33 is shown in Figure 1) are fixed to the first elongate beam 18 and to the second elongate beam 26. They are disposed at opposite transverse ends of the harvester head 14.

The first elongate beam 18, second elongate beam 26, and toolbar 36 are disposed horizontally and parallel to each other. They extend transversely, i.e. perpendicular to the direction of travel "V" of the agricultural harvester 10, with the second elongate beam 26 disposed below the auger trough 30 and back sheet 28. Toolbar 36 is supported on second elongate beam 26 by a plurality of toolbar supports 37 that are cantilevered forward from their mounting point on second elongate beam 26. Row units 24 (not shown) are mounted to toolbar 36 and extend forward in the direction of travel "V" from toolbar 36.

The auger trough 30 and the back sheet 28 are fixed together and to the first elongate beam 18 to form a continuous sheet extending from the first elongate beam 18 downward and behind auger 38, and then forward to the rear edge of the row units (not shown).

The auger trough 30 and back sheet 28 are generally planar sheet members or panels that are provided to support the crop material as it is carried by the auger 38 from the row units 24 to the central aperture 22. They are disposed adjacent the auger 38 on 2 sides -- the rear of auger 38 and the bottom of auger 38.

Back sheet 28 and auger trough 30 together form the working surfaces of the harvester head over which the cut crop material is dragged. The back sheet 28 prevents cut crop material from being pushed out the back of the combine as auger 38 rotates. The auger trough 30 forms a floor over which the cut crop material is dragged thereby preventing it from falling onto the ground.

The first elongate beam 18 has a forward-facing surface 40 to which a top surface portion 42 of the back sheet 28 is adhered with an interposed layer of adhesive 44. In Figures 2 and 3, top surface portion 42 of the back sheet 28 extends horizontally and laterally, parallel to the longitudinal extent of the first elongate beam 18, and coplanar with forward-facing surface 40.

The bottom surface portion 43 of the back sheet 28 is adhered to an upper portion 50 of auger trough 30 by an interposed layer of adhesive 52 over substantially its entire width. In the preferred embodiment, illustrated herein, the bottom surface portion 43 is divided into a plurality of extensions 48. These extensions 48 are adhered to upper portion 50 of auger trough 30 at individual, spaced apart locations. This panel-to-panel adhesion is provided by adhesive patches 62 that together form the interposed layer of adhesive 52.

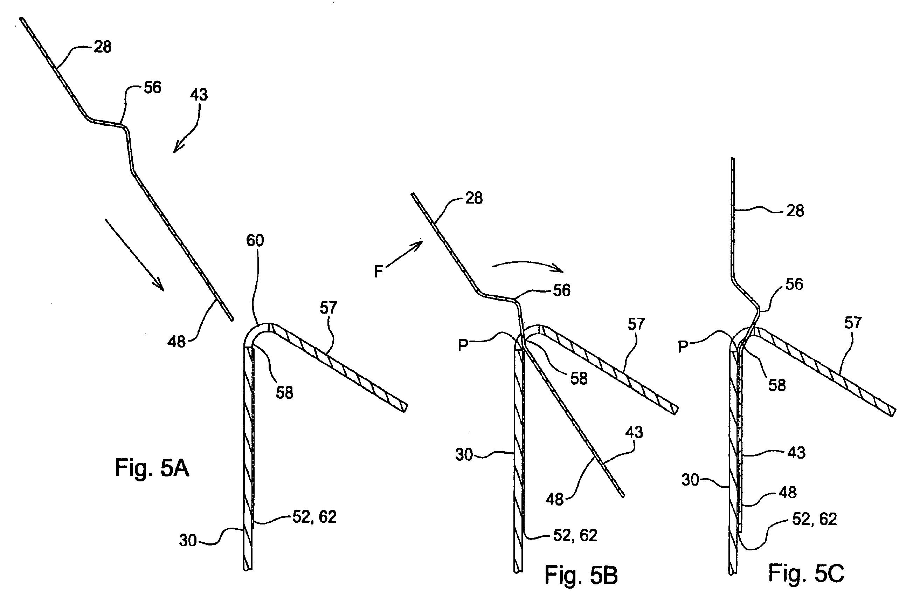

A crease 56 is provided in the back sheet just above the bottom surface portion 43 and its extensions 48. Crease 56 provides rigidity to the back sheet 28 adjacent to the extensions 48, projecting back sheet 28 into 3 dimensions to give it rigidity. This arrangements helps to ensure that back sheet 28 does not flex substantially when it is being assembled to auger trough 30, and ensures therefore that extensions 48 can be readily inserted into their corresponding slots 60 in auger trough 30. It also helps to ensure that the rotational forces later applied to rotate the back sheet 28 in auger trough 30 into their bonded position (see the sequence of Figures 5A-5C) are distributed over the entire layer of adhesive 52. This helps to ensure a consistent adhesive bond across the width of the harvesting head.

In another arrangement, rather than having extensions 48 disposed along the bottom edge of back sheet 28, the bottom surface portion 43 of the back sheet 28 is straight, unbroken and extends substantially the entire width of the harvester head. This bottom surface portion 43 is adhered to upper portion 50 over substantially its entire width, much as the top surface portion 42 of back sheet 28 is adhered to forward facing surface 40 of first elongate beam 18.

The very top edge of auger trough 30 is bent forward and creased to form a stripper 57 and crease 58. Stripper 57 and crease 58 extend transversely and parallel to the longitudinal extent of first elongate beam 18, the second elongate beam 26 and crease 56 of back sheet 28. The crease 58 that forms stripper 57 is disposed adjacent to and abutting crease 56 of back sheet 28. Crease 58 is parallel to the crease 56 over substantially the entire width of the back sheet. Crease 58 abuts crease 56 over substantially the entire width of the back sheet and the auger trough.

Stripper 57 serves to prevent cut crop material from winding around auger 38 as auger 38 rotates. This helps keep the cut crop material in the lower portions of the auger trough.

Figure 4 illustrates the interengagement of the back sheet 28 and the auger trough 30. In Figure 4, only a short length of the first elongate beam 18, the back sheet 28, and the auger trough 30 are shown. The tabbed fragmentary portion illustrated in Figure 4 is repeated over the entire width of the harvester head, with the exception, of course, of the central aperture region of the harvester head in which there is no back sheet 28 or upper portion of the auger trough 30.

Each of the plurality of extensions 48 has a generally rectangular tab shape. Each extension 48 is spaced apart from its adjacent extensions 48. Together, the extensions 48 extend in a line that is transverse and generally parallel to the longitudinal extent of the first elongate beam 18 and the harvesting head generally. Extensions 48 are separated from adjacent extensions 48 by a distance that is generally equal to or greater than the width of each extension.

Each extension 48 is received in a corresponding slot 60 in the upper portion of auger trough 30. Each slot 60 is oriented transversely with respect to the direction of travel and the harvesting head generally. Slots 60 are spaced apart from each other and are preferably disposed in a single line that is parallel to the longitudinal extent of the first elongate beam 18 (which also extends in the transverse direction) and parallel to the longitudinal extent of each slot 60.

Each extension 48 has a rear-facing surface portion 64 that is generally planar. This surface portion 64 of each extension 48 is adhered to an abutting forward facing surface portion 65 of the auger trough 30. Each of forward facing surface portions 65 is disposed directly below one of slots 60. An adhesive patch 62 is disposed between the two surface portions that has substantially the same area as the size of the extension to which it is bonded. This arrangement staggers the adhesive patches 62 along the lower edge of the back sheet 28 over substantially the entire width of the back sheet 28, providing a line of adhesive patches 62 between the back sheet 28 and the auger trough 30 that are substantially the same size and are spaced apart a distance generally equal to the lateral width of each adhesive joint.

In Figure 5A-5C, a method of assembling the back sheet 28 and auger trough 30 is illustrated. In Figure 5A, the auger trough 30 and the back sheet 28 are brought into close alignment, with the free ends of the plurality of extensions disposed adjacent to the slots 60 in which they will be received. In Figure 5B, the back sheet 28 and the auger trough 30 are shown in a subsequent position in which each of the plurality of extensions 48 has been received in its corresponding slot 60 in the auger trough 30. In this position, the extensions 48 have been inserted into slots 60 in the auger trough 30 to their maximum depth. The bottom of the back sheet 28 between each of the plurality of extensions abuts the upper portion of the auger trough 30 between the adjacent slots.

As shown in Figure 5B, they abut along pivot line "P", and are held in position by the weight of the upper one of the back sheet 28 and auger trough 30. In the picture illustrated here, back sheet 28 is shown above auger trough 30, and thus the weight of back sheet 28 would hold the extensions 48 into full engagement with slots 60 of auger trough 30. The positions could as easily be reversed, however, with the auger trough 30 superior and back sheet 28 inferior during assembly.

Once in this first predetermined relative position, shown in Figure 5B, the upper portion of the back sheet 28 is then pivoted forward about the transversely extending line of abutting engagement, shown in Figures 5B-5C as pivot line "P". The edge of the slots 60 serves as a fulcrum against which extensions 48 act. A manual force "F" applied to the top of back sheet 30 causes each of the inside rear-facing surfaces 64 of the plurality of extensions 48 to pivot toward the forward facing surface 65 of the auger trough 30 and toward the adhesive patch 62, which is disposed between forward facing surface 65 and rear facing surface 64. Since the back sheet 28 and auger trough 30 are limited in their relative movement due to the engagement of extensions 48 with slots 60, this rotational movement insures that the two surfaces 64, 65 make contact with each other while allowing no sliding movement of one surface 64, 65 with respect to the other surface 64, 65 (in other words, the only relative movement between the two surfaces is in a direction normal to the two surfaces).

During this rotational movement, the back sheet 28 and the auger trough 30 are relatively translated through a sequence of predetermined positions from the first relative position to the second relative position predetermined alignment by the abutting surfaces along the pivot line "P". When the plurality of extensions of the back sheet 28 and the auger trough 30 compress the adhesive patches between them they are in precise alignment.

Mere use of tab and slot engagement structures between the back sheet 28 and auger trough 30 will not automatically provide this ability to pivot with respect to each other and to simultaneously engage all of the adhesive patches 62 in compression (no shear) to form a bond as described in the previous 2 paragraphs. First, the engagement means must provide constrained relative rotational movement between the two sheets translating them through a sequence of predetermined positions in which they are held in careful alignment by their abutting surfaces. Second, the engagement must define a line of engagement about which the two surfaces can be relatively rotated. The advantages are significant. In the embodiment illustrated herein, a single force applied to the top of the back sheet 28 causes the simultaneous relative rotation of all of the individual extensions 48 with respect to their mating surfaces on the auger trough 30. This single force is thereby distributed to each of the adhesive patches, thereby causing one (or more) rotational forces applied to the back sheet 28 to be distributed to each of the extensions 48, which simultaneously creates each of the adhesive joints 62. This force distribution is enhanced by the provision of the transversely extending creases in the lower portion of the back sheet 28 and in the upper portion of the auger trough 30. These creases stiffen both structures right where the adhesive joints are created, which in turn distributes the force applied to the back sheet 28 more evenly to all of the adhesive joints, and provides for more consistent adhesive joints and prevent the 2 sheets from bowing with respect to each other -- i.e. they keep the line of contact "P" straight. This force distribution is significant for harvester heads because of the several-meter-long line of adhesive joints that must be simultaneously created.

In the illustrated embodiment of Figures 5A-5C the adhesive patches 62 are initially fixed to the slotted member, here shown as the auger trough 30. In another arrangement the adhesive patches 62 may be fixed to the plurality of extensions 48 of a second member, here shown as the back sheet 28. Alternatively, the adhesive patches 62 may be initially fixed to the plurality of extensions 48 and then brought into contact with the slotted member (auger trough 30).

In another alternative arrangement (not shown), the adhesive patches 62 can be joined together in an elongate adhesive strip that extends over a substantial length of the back sheet 28 (or auger trough 30). To adhere several adjacent extensions 48 against the corresponding surfaces of auger trough 30 with which they mate. In this arrangement, an excess of adhesive material would extend between adjacent extensions 48, exposed to the elements, and would be gradually worn away during normal operation. Since this access adhesive portion between adjacent adhesive patches 62 is not adhered between 2 surfaces, its presence is unnecessary. Several of the adhesive patches 62 can be simultaneously fixed to auger trough 30 by unrolling an adhesive strip against auger trough 30 to be adhered to auger trough 30. The other side of the elongate adhesive strip can have an elongate protective layer attached that protects the adhesive on the exposed side of the elongate adhesive strip. Once this step of fixing one surface of the elongate adhesive strip against the auger trough 30 is complete, the operator can simultaneously expose the entire length of the other side of the elongate adhesive strip (the side that bonds to extensions 48) by grasping one end of the elongate protective layer and pulling it free from the entire length of the elongate adhesive strip. This has the effect of simultaneously removing the elongate protective layer from a significant portion of (even the entire length of) the entire elongate adhesive strip and hence simultaneously removing a protective layer from the plurality of the adhesive patches 62 (which in this embodiment are merely portions of the elongate adhesive strip) with a single pull of a single elongate protective layer.

## Claims

1. A harvester head (14) comprising a back sheet (28) having a top surface portion (42) configured to be secured to a first surface portion (40) of the harvester head (14) with a first adhesive layer (44), and a bottom surface portion (43) configured to be secured to a second surface portion (50) of the harvester head (14) with the second adhesive layer (52), wherein:
the back sheet (28) is of sheet metal and adhered to an upper portion (50) of an auger trough (30) of sheet metal by the interposed second adhesive layer (52) that fixes the bottom surface portion (43) of the back sheet (28) and the upper portion (50) of the auger trough (30) together,
the auger trough (30) and the back sheet (28) are disposed to direct a lateral flow of cut crop material toward a feederhouse (16),
the bottom surface portion (43) of the back sheet (28) includes alignment structures configured to hold the back sheet (28) in alignment with the second surface portion (50),
the alignment structures comprise a transverse crease (56) and a plurality of tabs (48) located beneath the crease (56) in the back sheet (28),
the very upper edge of the auger trough (30) is bent forward and creased to form a crease (58) and a stripper (57);
the tabs (48) are inserted into corresponding transverse slots (60) in the auger trough (30) with the crease (58) forming the stripper (57) abutting the crease (56) of the back sheet (28).

2. The harvester head (14) of claim 1 further comprising structures (46) for holding the back sheet (28) in alignment with the first surface portion (40) while the first surface portion (40) and the top surface portion (42) are secured to each other with the first adhesive layer (44).

## Patentansprüche

1. Erntevorsatz (14), der eine Rückplatte (28) umfasst, mit einem Oberseitenteil (42), der zur Befestigung an einem ersten Flächenteil (40) des Erntevorsatzes (14) mit einer ersten Klebstoffschicht (44) konfiguriert ist, und einem Unterseitenteil (43), der zur Befestigung an einem zweiten Flächenteil (50) des Erntevorsatzes (14) der zweiten Klebstoffschicht (52) konfiguriert ist, wobei:
die Rückplatte (28) aus Blech ist und durch die dazwischen angeordnete zweite Klebstoffschicht (52), die den Unterseitenteil (43) der Rückplatte (28) und den oberen Teil (50) einer Förderschneckenmulde (30) aneinander befestigt, mit einem oberen Teil (50) der Förderschneckenmulde (30) aus Blech verklebt ist,
die Förderschneckenmulde (30) und die Rückplatte (28) zum Leiten eines lateralen Stroms des geschnittenen Ernteguts zu einem Fördergehäuse (16) angeordnet sind,
der Unterseitenteil (43) der Rückplatte (28) Ausrichtungsstrukturen enthält, die zum Halten der Rückplatte (28) in Ausrichtung auf den zweiten Flächenteil (50) konfiguriert sind,
die Ausrichtungsstrukturen einen Querknick (56) und mehrere Nasen (48) umfassen, die unterhalb des Knicks (56) in der Rückplatte (28) positioniert sind,
der oberste Rand der Förderschneckenmulde (30) nach vorne gebogen und zur Bildung eines Knicks (58) und eines Abstreifers (57) geknickt ist;
die Nasen (48) in entsprechende Querschlitze (60) in der Förderschneckenmulde (30) eingeführt sind, wobei der den Abstreifer (57) bildende Knick (58) an den Knick (56) der Rückplatte (28) anstößt.

2. Erntevorsatz (14) nach Anspruch 1, der weiterhin Strukturen (46) zum Halten der Rückplatte (28) in Ausrichtung auf den ersten Flächenteil (40), während der erste Flächenteil (40) und der Oberseitenteil (42) mit der ersten Klebstoffschicht (44) aneinander befestigt sind, umfasst.

## Revendications

1. Tête de moissonneuse (14) comprenant une feuille arrière (28), comportant une partie de surface supérieure (42) configurée pour être attachée à une première partie de surface (40) de la tête de moissonneuse (14) à l'aide d'une première couche d'adhésif (44), et une partie de surface inférieure (43) configurée pour être attachée à une deuxième partie de surface (50) de la tête de moissonneuse (14) à l'aide de la deuxième couche d'adhésif (52) :
la feuille arrière (28) étant en tôle et collée à une partie supérieure (50) d'une auge de vis sans fin (30) en tôle par l'intermédiaire de la deuxième couche d'adhésif interposée (52) qui fixe l'une à l'autre la partie de surface inférieure (43) de la feuille arrière (28) et la partie supérieure (50) de l'auge de vis sans fin (30),
l'auge de vis sans fin (30) et la feuille arrière (28) étant disposées de manière à diriger un flux latéral de matières de récolte coupées en direction d'un convoyeur (16),
la partie de surface inférieure (43) de la feuille arrière (28) comportant des structures d'alignement configurées pour maintenir la feuille arrière (28) en alignement avec la deuxième partie de surface (50),
les structures d'alignement comprenant un pli transversal (56) et une pluralité de pattes (48) situées derrière le pli (56) dans la feuille arrière (28),
le bord tout à fait supérieur de l'auge de vis sans fin (30) étant courbé vers l'avant et plié de façon à former un pli (58) et un débourreur (57) ;
les pattes (48) étant insérées dans des fentes transversales (60) correspondantes dans l'auge de vis sans fin (30), le pli (58) formant le débourreur (57) se trouvant en appui contre le pli (56) de la feuille arrière (28).

2. Tête de moissonneuse (14) selon la revendication 1, comportant en outre des structures (46) destinées à maintenir la feuille arrière (28) en alignement avec la première partie de surface (40) tandis que la première partie de surface (40) et la partie de surface supérieure (42) sont attachées l'une à l'autre à l'aide de la première couche d'adhésif (44).
